# FASCICULE DE BREVET EUROPEEN

(11) **EP 3 810 732 B1**
(45) Date de publication et mention de la délivrance du brevet: **08.06.2022**
(21) Numéro de dépôt: 19729301.2
(22) Date de dépôt: 12.06.2019
(51) Int. Cl.: C10L 5/36, B02C 21/00, C10J 3/00, C10L 5/44, C10L 9/08, C10B 53/02, C10B 57/14, C10J 3/62, C10B 49/02

(54) **PROCEDE DE TRAITEMENT DE LA BIOMASSE PAR CO-BROYAGE AVEC UNE SECONDE CHARGE DE BIOMASSE**
VERFAHREN ZUR VERARBEITUNG VON BIOMASSE DURCH VERMAHLEN MIT EINEM ZWEITEN BIOMASSEROHSTOFF
METHOD FOR PROCESSING BIOMASS BY CO-GRINDING WITH A SECOND BIOMASS FEEDSTOCK

(30) Priorité: 21.06.2018 FR 1855487
(43) Date de publication de la demande: 28.04.2021
(73) Titulaire: IFP Energies nouvelles, 92852 Rueil-Malmaison Cedex (FR); AXENS, 92508 Rueil-Malmaison Cedex (FR); Commissariat à l'Energie Atomique et aux Energies Alternatives, 75015 Paris (FR); Total Raffinage Chimie, 92400 Courbevoie (FR); thyssenkrupp Industrial Solutions AG, 45143 Essen (DE); Avril, 75008 Paris (FR); Bionext, 60280 Venette (FR)
(72) Inventeur: PLENNEVAUX, Thomas, 92852 RUEIL-MALMAISON CEDEX (FR); GAZARIAN, Jeremy, 92852 RUEIL-MALMAISON CEDEX (FR); BOURNAY, Laurent, 92852 RUEIL-MALMAISON CEDEX (FR); ULLRICH, Norbert, 45139 ESSEN (DE); HECQUET, Michael, 76930 OCTEVILLE SUR MER (FR)
(74) Mandataire: IFP Energies nouvelles
(86) Numéro de dépôt international: PCT/EP2019/065398
(87) Numéro de publication internationale: WO 2019/243140

(56) Documents cités:
- WO-A1-2014/068253
- CN-A- 107 652 992
- US-A1- 2012 266 531

## Description

### DOMAINE TECHNIQUE

La présente invention a pour objet le traitement de biomasse pour sa préparation dans le but de sa valorisation notamment par gazéification pour la production d'hydrocarbures liquides, et éventuellement la production de bases pétrochimiques et/ou de bases chimiques et/ou d'hydrogène.

Plus particulièrement, la présente invention concerne un procédé de traitement d'une charge comprenant de la biomasse en vue de son injection dans un réacteur de gazéification pour la production d'hydrocarbures notamment des essences et du gazole et du kérosène.

### ART ANTERIEUR

Dans le domaine de l'invention, l'homme du métier cherche constamment à améliorer le conditionnement de la biomasse notamment pour améliorer son pouvoir calorifique.

Plus particulièrement, l'amélioration de la granulométrie de la poudre obtenue par le procédé de traitement à partir de la biomasse et le coût énergétique associé à ce traitement, sont des paramètres essentiels de la préparation de la biomasse notamment dans des procédés plus globaux de gazéification.

Le traitement de la biomasse est bien connu de l'homme de l'art pour sa valorisation par la production d'hydrocarbures. Les principales étapes de ce traitement sont le séchage, le traitement thermique, tel que la torréfaction et le broyage. Ces étapes sont notamment décrites dans les demandes WO2014/068253. Les principaux paramètres de ce traitement sont les caractéristiques de la poudre obtenue, notamment ces dimensions, ainsi que le coût énergétique du broyage et plus généralement du procédé.

La demande WO2013/114328 décrit un procédé de broyage de charge carbonée issu de la biomasse en présence d'additifs sous forme de poudre de dimension micronique, issu de matière minérale telle que le stéarate de magnésium ou la silice sous forme de micro perle et/ou végétale telle que le charbon de bois, dans le but d'améliorer les propriétés de la poudre obtenue par le broyage de la biomasse telles que la coulabilité et l'aptitude à la fluidisation, et ainsi de permettre l'obtention d'un mélange intime de poudres de faibles granulométries. Ce document ne décrit pas l'utilisation d'additifs autre que sous forme de poudre et uniquement à des dimensions microniques, lors du broyage de la biomasse. L'optimisation du traitement et du conditionnement de la biomasse, notamment par la simplification des procédés mis en œuvre, la diminution du coût énergétique desdites étapes, notamment l'étape de broyage reste un enjeu important du domaine de l'invention. De manière surprenante, la demanderesse a découvert un procédé de traitement d'une première charge de biomasse par au moins une étape de co-broyage de ladite charge en mélange avec une seconde charge de biomasse. Avantageusement, ledit co-broyage permet le broyage des charges ainsi que le séchage et le broyage d'une seconde charge de biomasse. En effet le broyage de la charge de biomasse est une étape exothermique et la chaleur générée permet avantageusement de sécher simultanément la seconde charge de biomasse. Un autre avantage du procédé selon l'invention est la diminution du coût énergétique du procédé par l'intégration énergétique des gaz formés lors des différentes étapes.

### RESUME DE L'INVENTION

Un objet de la présente invention est de fournir un nouveau procédé de traitement d'une première charge solide de biomasse, ledit procédé comprenant les étapes suivantes :
a) Une étape de séchage de ladite charge à une température comprise entre 20 et 180°C, pendant une durée comprise entre 5 et 180 minutes,
b) Une étape de torréfaction de la charge séchée issue de l'étape a) pour produire au moins un effluent solide biomasse torréfiée, et
c) Une étape de co-broyage de l'effluent solide biomasse torréfiée issu de l'étape b) en présence d'une seconde charge solide de biomasse pour obtenir une poudre, dans lequel la seconde charge solide de biomasse entrante à l'étape c) de co-broyage à un taux d'humidité compris entre 3,1 et 30 % massique.

Un avantage du procédé selon la présente invention est de permettre l'obtention d'un mélange intime de poudres de faibles granulométries provenant de charges biomasses.

Un avantage du co-broyage selon la présente invention est de permettre le séchage d'une seconde charge brute de biomasse simultanément à l'étape c) de co-broyage par le transfert de l'énergie thermique générée par le broyage de la biomasse torréfiée vers la seconde charge de biomasse.

Un autre avantage de la présente invention est de permettre le traitement de biomasses à un coût énergétique limité grâce à la combinaison d'un enchainement d'étapes opérant dans des conditions spécifiques permettant leur intégration énergétique.

De préférence, le procédé comprend une étape d) de séchage finale de la poudre obtenue à l'issue de l'étape c) à une température comprise entre 100 et 300°C.

De préférence, l'étape d) de séchage est réalisée simultanément à l'étape c) de co-broyage.

De préférence, la biomasse est de la biomasse de type lignocellulosique. De préférence, le procédé comprend une étape i) de prétraitement de la première charge de biomasse, de préférence une étape de broyage primaire.

De préférence, l'étape b) de torréfaction est réalisée à une température comprise entre 200 et 350°C, de préférence entre 220 et 340°C, de préférence entre 250 et 320°C et plus préférentiellement entre 270 et 300°C pendant une durée comprise entre 5 et 180 minutes, et préférentiellement entre 15 et 60 minutes, à une pression opératoire absolue comprise préférentiellement entre 0,01 et 1,5 MPa, de manière préférée entre 0,01 et 1,0 MPa et de manière plus préférée entre 0,05 et 0,15 MPa.

De préférence, le procédé comprend une étape ii) de combustion des gaz de torréfaction issu de l'étape b).

De préférence, l'énergie issue de l'étape ii) de combustion des gaz de torréfaction est utilisée pour apporter l'énergie thermique nécessaire dans une étape du procédé, de préférence à aux étapes a), b) et/ou d).

De préférence, la seconde charge de biomasse est soumise à une étape iii) de séchage préliminaire et ou de broyage primaire.

De préférence, l'effluent solide biomasse torréfiée issu de l'étape b) est introduite dans l'étape c) de co-broyage dans un pourcentage massique entre l'effluent solide biomasse torréfiée dans la charge totale solide compris entre 1,0 et 99 % massique, de préférence entre 50 et 98 % massique, et préférentiellement entre 40 et 95% massique, ladite charge totale solide étant la somme de l'effluent solide de biomasse torréfiée et de la seconde charge de biomasse.

De préférence, la seconde charge brute de biomasse ayant été soumise ou non à une étape préliminaire de séchage iii), entrant dans l'étape c) de co-broyage à un taux d'humidité compris entre 4,0 et 25 % massique et de manière très préféré compris entre 5,0 et 20 % massique.

De préférence, le procédé comprend une ou plusieurs étapes de stockage e) de l'effluent issu de l'une ou quelconque des étapes du procédé, et de préférence à l'une ou plusieurs des étapes a), b), c), ou d).

De préférence, le procédé comprend une étape f) de transport, de préférence de transport pneumatique.

De préférence, le procédé comprend une étape g) de gazéification à une température comprise entre 800 et 1800°C, de préférence entre 1000 et 1600°C et plus préférentiellement entre 1200 et 1500°C et à une pression absolue avantageusement comprise entre 2,0 et 12,0 MPa, de préférence entre 2,5 et 6,0 MPa, et plus préférentiellement entre 3,0 et 5,0 MPa.

### DEFINITIONS & ABREVIATIONS

Dans l'ensemble de la description les termes ou abréviations ci-après ont le sens suivant :
On entend par charge de biomasse, de façon non limitative, la biomasse de type solide, et en particulier de la biomasse de type lignocellulosique. Des exemples non limitatifs de types de biomasse concernent par exemple les résidus d'exploitation agricole (notamment paille, rafles de maïs), les résidus d'exploitation forestière, les produits de l'exploitation forestière, les résidus de scieries, les cultures dédiées par exemple taillis à courte rotation.

On entend par perte de masse anhydre, la pourcentage de matière perdue lors de l'étape de torréfaction (hors eau) ramenée à la masse totale injectée dans l'étape de torréfaction (hors eau).

On entend par torréfaction, un procédé de traitement thermique à une température comprise entre 200 et 350°C, et réalisé généralement dans une atmosphère appauvrie en oxygène. On entend par gazéification, une étape mettant en œuvre une réaction d'oxydation partielle qui convertit la charge en gaz de synthèse comprenant majoritairement du monoxyde de carbone et du dihydrogène.

On entend par co-broyage, le broyage de la charge de biomasse en présence de la seconde charge brute de biomasse.

On entend par ratio, rapport massique, le rapport entre la masse du constituant considéré par rapport à la masse total de la charge.

On entend par taille caractéristique, la mesure de la longueur d'une particule selon sa plus grande dimension.

On entend par anisotrope des propriétés variables de résistance de la matière selon l'orientation de l'effort auquel elle est soumise.

On en par taux d'humidité, le rapport entre la masse d'eau contenant dans une charge et la masse totale de ladite charge.

### DESCRIPTION DETAILLEE DE L'INVENTION

Dans le sens de la présente invention, les différents modes de réalisation présentés dans l'ensemble de la description peuvent être utilisés seuls ou en combinaison les uns avec les autres, sans limitation de combinaison.

### La Charge

Conformément à l'invention, les premières et secondes charges du procédé sont choisies parmi la biomasse seule ou en mélange. La quantité d'eau contenue dans la charge est comprise entre 1 et 80 % massique, de préférence comprise entre 5 et 75% et de préférence entre 10 et 70%.

La biomasse est de la biomasse de type solide, et en particulier de la biomasse de type lignocellulosique. Des exemples non limitatifs de types de biomasse concernent par exemple les résidus d'exploitation agricole (notamment paille, rafles de maïs), les résidus d'exploitation forestière, les produits de l'exploitation forestière, les résidus de scieries, les cultures dédiées par exemple taillis à courte rotation.

De préférence, la biomasse est de la biomasse lignocellulosique. Elle comprend essentiellement trois constituants naturels présents en quantités variables selon son origine : la cellulose, l'hémicellulose et la lignine.

La charge de biomasse lignocellulosique est utilisée sous sa forme, c'est-à-dire dans l'intégralité de ces trois constituants cellulose, hémicellulose et lignine.

Dans un mode de réalisation préféré de l'invention, la biomasse lignocellulosique est choisie parmi la biomasse herbeuse, les résidus d'exploitation agricole tel que les déchets de paille, rafles de maïs, la bagasse de canne à sucre, les résidus d'exploitation forestière ou de scieries tel que les copeaux de bois ou tout autre type de résidus ligneux.

Dans une mode de réalisation préféré de l'invention, la première charge de biomasse peut éventuellement subir une étape i) de prétraitement préalablement à son introduction dans l'étape a) du procédé selon l'invention. L'objectif de l'étape i) de prétraitement est de permettre l'injection de la charge prétraitée dans l'étape a) de séchage.

L'étape i) de prétraitement est fonction du type de charge considérée. De préférence l'étape i) de prétraitement est une étape de broyage primaire de ladite charge permettant de réduire sa granulométrie à une taille caractéristique comprise entre 10 et 50 mm. Ladite étape i) de broyage primaire est avantageusement mise en œuvre selon une technique connue de l'homme du métier. L'étape i) de prétraitement peut également avantageusement comporter une mise en forme de la charge telle que par exemple par pelletisation, compression ou toute autre technique connue de l'homme du métier en vue de faciliter son transport, son stockage, et son traitement ultérieur dans l'étape a) de séchage du procédé selon l'invention.

### Etape a) de séchage

Conformément à l'invention, le procédé comprend une étape a) de séchage de la première charge de biomasse, éventuellement prétraitée, ladite étape a) de séchage est mise en œuvre par la mise en contact de la charge avec un flux de gaz chaud qui se refroidit. Le flux de gaz chaud entre à ladite étape à une température comprise entre 50 et 500°C, de préférence entre 100 et 450°C et préférentiellement entre 150 et 350°C, et pendant une durée comprise entre 5 et 180 minutes, de préférence entre 10 et 100 minutes et préférentiellement entre 15 et 60 minutes et fourni la charge séchée et éventuellement prétraitée. Le solide séché sort de ladite étape à une température comprise entre 40 et 120°C, de préférence entre 50 et 90°C, encore plus préférentiellement entre 60 et 80°C.

Le but du séchage est d'éliminer l'eau contenue dans la charge. Conformément à l'invention, la quantité d'eau résiduelle en sortie de l'étape a) de séchage est comprise entre 0,0 et 5,0 % massique par rapport à la masse totale de la charge, de préférence entre 0,0 et 4,5 %, de manière préférée entre 0,0 et 4,0 %.

L'énergie nécessaire au séchage est généralement apportée par la mise en contact de la charge avec un flux de gaz chauds.

Le flux de gaz chauds utilisé dans l'étape de séchage peut avantageusement provenir de la combustion d'un intrant au procédé et de préférence de la combustion du gaz naturel et/ou de la combustion d'un flux gazeux issus d'une autre étape du procédé.

Par exemple, la combustion des gaz issus de l'étape b) de torréfaction produit un flux de gaz chaud utilisable pour sécher la charge pour toute méthode connue de l'homme du métier.

L'effluent gazeux issu de l'étape a) contenant de l'eau peut être utilisé pour préchauffer l'air permettant la combustion du gaz naturel et/ou du flux gazeux produit lors de la torréfaction.

Dans un mode réalisation préféré, ladite charge (1) introduite à l'étape a) est constituée de biomasse tel que définie précédemment.

Dans un mode réalisation particulier, ladite charge (1) introduite à l'étape a) est constituée de biomasse tel que définie précédemment.

### Etape b) de torréfaction

Conformément à l'invention, la charge séchée issue de l'étape a) est envoyée dans une étape b) de torréfaction pour produire au moins un effluent solide de biomasse torréfiée.

La torréfaction est un processus de décomposition thermique douce dans une gamme de température comprise entre 200 et 350°C. Ce processus est généralement caractérisé par de faibles vitesses de montée en température (< 50°C/min) et de longs temps de séjour (entre 20 min et 60 min).

Conformément à l'invention, l'étape b) de torréfaction est réalisée à une température comprise entre 200 et 350°C, de préférence entre 220 et 340°C, de préférence entre 250 et 320°C et plus préférentiellement entre 270 et 300°C pendant une durée comprise entre 5 et 180 minutes, et préférentiellement entre 15 et 60 minutes, à une pression opératoire absolue comprise préférentiellement entre 0,01 et 1,5 MPa, de manière préférée entre 0,01 et 1,0 MPa et de manière plus préférée entre 0,05 et 0,15 MPa. L'opération de torréfaction est réalisée dans un environnement dont la teneur en oxygène est inférieur à 10,0 % volume, de préférence, est comprise entre 0,0 et 10,0 % volume, de préférence entre 0,0 et 8,0 % volume et préférentiellement entre 0,0 et 3,0 % volume.

Autour de 200°C, les hémicelluloses, qui sont les composés les plus réactifs de la biomasse lignocellulosique, commencent à subir des réactions de dévolatilisation et de carbonisation. A ce niveau de température, la cellulose et la lignine ne sont, pour leur part, que peu transformées. Les produits de décomposition de la biomasse lignocellulosique sont générés sous forme de gaz condensables (principalement eau, acide formique, acide acétique et autres composés organiques) et d'incondensables (principalement CO et CO₂).

La torréfaction modifie la structure de la biomasse lignocellulosique et donc ses propriétés. En particulier l'opération de torréfaction rend la biomasse plus fragile et atténue son caractère fortement anisotrope. Il est bien connu de l'homme de l'art que le bois par exemple de par sa nature fibreuse aura une résistance élastique à l'étirement bien plus importante si elle est appliquée dans le sens des fibres que si elle est appliquée transversalement à celles-ci. Ainsi en comparaison avec une poudre de biomasse d'une granulométrie moyenne donnée, l'obtention d'une poudre équivalente à partir de la même biomasse ayant subi une étape de torréfaction, nécessitera une énergie de broyage bien plus faible (effet lié à la fragilité de la matière) et la forme finale des particules solides obtenues se rapproche de particules sphériques (effet lié au caractère moins anisotrope) ce qui facilite le broyage ultérieur.

Ladite étape b) de torréfaction peut avantageusement être mise en œuvre dans un dispositif de type four rotatif, four tournant, four à vis, four à lits mobiles et fours à lits fluidisés.

Conformément à l'invention, l'étape b) de torréfaction produit un effluent solide appelé biomasse torréfiée.

Ladite étape b) de torréfaction permet également la production d'un effluent gazeux combustible, appelé gaz de torréfaction, dont la quantité représente de préférence de 5,0 à 40,0 % de la masse de biomasse séchée issue de l'étape a) initiale selon les conditions opératoires et de façon plus préférée de 10,0 à 35,0 %.

Un des paramètres clés de l'étape de torréfaction est la perte de masse anhydre (exprimée en pourcentage massique) définie comme le pourcentage de perte de masse entre biomasse initiale sèche et biomasse torréfiée sèche. Plus cette perte est élevée, plus le rendement massique solide est faible, plus la quantité de gaz de torréfaction générée est grande. Il est connu que le pouvoir calorifique inférieur (PCI) de ce gaz est également fonction du pourcentage de perte de masse anhydre (le PCI est une fonction croissante de ce pourcentage pour une charge donnée).

Selon l'invention, le choix d'un pourcentage suffisamment élevé de perte de masse anhydre lors de l'étape de torréfaction permet de limiter la consommation d'un combustible entrant dans le procédé notamment lors du séchage. Ainsi il limite l'utilisation de combustible d'origine fossile par la valorisation des gaz de torréfaction générés à l'étape de torréfaction.

Dans un mode de réalisation préféré, le pourcentage de perte anhydre est choisi de manière à ce que la chaleur dégagée par la combustion des gaz de torréfaction (de manière interne ou externe en postcombustion) permette d'apporter l'énergie nécessaire au moins à une étape de séchage. De préférence, la perte de masse anhydre est comprise entre 1,0 et 40,0 % massique, de préférence entre 5,0 et 35,0 % massique, et préférentiellement entre 15,0 et 30,0 % massique, par rapport à la masse totale de la charge introduite à l'étape b) de torréfaction.

Dans un mode de réalisation du procédé, les gaz de torréfaction sont envoyés dans une étape ii) de combustion dans laquelle ils sont brulés pour produire, un flux de gaz chauds dans une chambre de combustion en présence d'air et éventuellement de gaz naturel pouvant être envoyé vers les étapes a) et/ou d) de séchage, ou un flux de gaz chaud pouvant être renvoyé dans l'étape b) de torréfaction. L'étape ii) de combustion peut avantageusement être intégrée à l'étape b) de torréfaction ou pas.

Dans un mode de réalisation, l'énergie produite lors de l'étape ii) de combustion des gaz de torréfaction issus de l'étape b) est utilisée pour apporter l'énergie nécessaire à au moins une étape du procédé, de préférence à l'étape a) de séchage et de préférence également à l'étape d) de séchage final par l'intermédiaire du flux ou à l'étape b) de torréfaction par l'intermédiaire du flux.

L'énergie thermique issue de l'étape ii) de combustion est envoyée aux étapes a), b) et/ou d) par des moyens connus de l'homme du métier.

Une partie du flux de gaz chaud issu de l'étape ii) de combustion peut avantageusement être envoyée dans une étape d'échange thermique permettant de préchauffer l'air utilisé dans l'étape a) de séchage et dans l'étape de séchage final d).

Dans un mode de réalisation, une partie du flux de gaz chauds issus de l'étape ii) de combustion est directement injectée dans l'étape b) de torréfaction de manière à apporter par échange thermique gaz/solide, l'énergie nécessaire à la transformation de la charge de biomasse.

Si le flux de gaz de torréfaction combustible issu de l'étape b) n'est pas suffisant, un appoint de combustible et de préférence de gaz naturel peut avantageusement être introduit dans l'étape ii) de combustion de manière à obtenir l'énergie nécessaire aux différents étapes consommatrices d'énergie thermique.

A l'issue de l'étape b) de torréfaction, l'effluent solide biomasse torréfiée obtenu à un taux d'humidité compris entre 0,0 et 5,0 % massique, et de préférence entre 0,0 et 3,0 % massique, et de manière très préféré entre 0,001 et 3,0 %. Par solide biomasse torréfiée, on entend un solide obtenu par torréfaction de la biomasse.

L'effluent solide biomasse torréfiée obtenu à l'issue de l'étape b) peut éventuellement être stocké dans une étape optionnelle de stockage avant son introduction dans l'étape c) de co-broyage du procédé selon l'invention. Ladite étape de stockage peut avantageusement être réalisée selon des méthodes connues de l'homme du métier. De préférence, la biomasse solide torréfiée peut être stockée dans des capacités à vis planétaires, dans des silos, ou sous hangar dans des cellules ouvertes adaptées.

Dans le cas avantageux où l'étape c) de co-broyage est mise en œuvre de manière séquentielle, une étape de stockage permet de continuer à opérer l'étape b) de torréfaction et l'étape ii) optionnelle de combustion afin de continuer à produire le flux de gaz chaud nécessaire aux étapes a) de séchage et d) de séchage final.

### Etape c) de co-broyage

Conformément à l'invention, le procédé comprend une étape c) de co-broyage de l'effluent solide biomasse torréfiée issu de l'étape b), et ayant éventuellement été stocké dans une étape optionnelle de stockage, en présence d'une seconde charge de biomasse pour obtenir un effluent broyé, encore appelé poudre broyée. Ladite étape c) de co-broyage est mise en œuvre à une température comprise entre 0°C et 150°C et préférentiellement entre 20°C et 100°C et encore préférentiellement entre 50°C et 90°C.La seconde charge de biomasse et l'effluent solide biomasse torréfiée sont broyées simultanément dans un unique et même broyeur.

L'objectif de l'étape c) de co-broyage est de réduire la granulométrie des deux charges de biomasses introduites dans ladite étape c), tout en assurant une forme de particule propice à leur transport et leur utilisation ultérieurs, et de préférence à leur injection dans une étape de gazéification. Les particules de l'effluent en sortie de ladite étape c) de co-broyage ont une taille caractéristique comprise entre 50 et 500 microns, de préférence 70 et 200 microns et de préférence entre 80 et 150 microns.

Ladite seconde charge de biomasse introduite dans l'étape c) de co-broyage est choisi parmi les charges biomasses tel que défini précédemment. La seconde charge de biomasse peut être identique ou différente de la charge de biomasse introduite à l'étape a) de séchage.

De préférence, les dimensions de la seconde charge de biomasse introduite à l'étape c) de co-broyage sont comprises entre 1,0 et 100 millimètres, de préférence entre 2,0 et 80 millimètres, de préférence entre 3,0 et 70 millimètres, de préférence entre 4,0 et 60 millimètres et préférentiellement entre 5,0 et 50 millimètres.

Dans un mode de réalisation particulier, la charge fossile peut présenter des dimensions comprises entre 30 et 100 millimètres, de préférence entre 35 et 90 millimètres, de préférence entre 40 et 80 millimètres et de manière préférée entre 45 et 70 millimètres. Dans un autre mode de réalisation particulier, la charge fossile peut présenter des dimensions comprises entre 1,0 et 60 millimètres, de préférence entre 2,0 et 50 millimètres, de préférence entre 3,0 et 40 millimètres et de manière préférée entre 4,0 et 30 millimètres.

Le taux d'humidité de la seconde charge solide de biomasse entrant dans l'étape c) de co-broyage doit être compris entre 3,1 et 30,0 % massique, préférentiellement entre 4,0 et 25,0 % massique et de manière très préféré compris entre 5,0 et 20,0 % massique.

Dans une mode de réalisation préféré de l'invention, ladite seconde charge de biomasse peut éventuellement subir une étape iii) de prétraitement préalablement à son introduction dans l'étape c) du procédé selon l'invention. L'objectif de l'étape iii) de prétraitement est de permettre l'injection de la seconde charge de biomasse à l'étape c) de co-broyage dans les spécificités souhaitées.

L'étape iii) de prétraitement est fonction du type de seconde charge de biomasse considérée. De préférence l'étape iii) de prétraitement est une étape de broyage primaire de ladite seconde charge permettant de réduire sa granulométrie à une taille caractéristique comprise entre 10 et 50 mm. Ladite étape iii) de broyage primaire est avantageusement mise en œuvre selon une technique connue de l'homme du métier. L'étape iii) de prétraitement peut également avantageusement comporter une mise en forme de la seconde charge de biomasse telle que par exemple par pelletisation, compression ou toute autre technique connue de l'homme du métier en vue de faciliter son transport, son stockage, et son traitement ultérieur dans l'étape c) de co-broyage du procédé selon l'invention.

Avantageusement, l'étape iii) de prétraitement est une étape de séchage préliminaire dépendant du taux initial d'humidité de la seconde charge de biomasse avant son introduction dans l'étape c) de co-broyage. L'étape iii) de séchage préliminaire permet d'obtenir une charge seconde charge brute de biomasse dite pré séchée et de la rendre compatible avec son injection dans l'étape c) de co-broyage.

De préférence, l'effluent solide biomasse torréfiée et la seconde charge de biomasse sont introduites dans ladite étape c) de co-broyage de sorte que le pourcentage massique entre l'effluent solide biomasse torréfiée dans la charge totale solide alimentant l'étape c) de co-broyage est compris entre 1 et 99 % massique, de préférence entre 40 et 98 % massique, de préférence entre 50 et 95% massique. On entend par charge totale solide la somme de l'effluent solide de biomasse torréfiée et de la seconde charge de biomasse.

De préférence, l'étape de co-broyage peut être mise en œuvre en présence d'un composé additionnel utile pour l'étape ultérieure de gazéification, ledit composé est choisi parmi des cendres vitrifiées, du sable, du calcaire, de la chaux ou d'autres composés connus de l'Homme du métier pris seul ou en mélange.

De préférence, le broyeur est choisi de manière à optimiser le transport pneumatique de la poudre obtenue à l'issue de l'étape c), en minimisant la vitesse minimale de fluidisation (UMF), ainsi que sa propre consommation énergétique.

De préférence, ladite étape c) de co-broyage est mise en œuvre dans un broyeur de type « roller mill », « universel », « attrition », ou tout autre type de broyeurs connus de l'homme du métier

De façon surprenante, la demanderesse a constaté que le co-broyage de l'effluent solide biomasse torréfiée et d'une seconde charge de biomasse entraîne en plus du broyage de la seconde charge brute de biomasse, le séchage particulièrement efficace de ladite charge de biomasse. En effet, le broyage est une étape très exothermique. De plus, la mise en œuvre telle que décrite selon l'invention permet un mélange intime des deux charges biomasses. Ainsi, le co-broyage d'une charge peu humide, telle que l'effluent solide biomasse torréfiée avec une charge humide, telle que la seconde charge de biomasse permet un transfert de la chaleur générée par le broyage de la biomasse vers l'eau contenue dans la seconde charge de biomasse et optimise ainsi le séchage de cette dernière. Ce séchage simultané permet avantageusement de simplifier le nombre d'étapes du procédé ainsi que de limiter sa consommation énergétique.

### Etape optionnelle d) de séchage final

Dans un mode particulier de réalisation, le procédé selon l'invention peut en outre comprendre une étape d) de séchage finale de la poudre obtenue à l'issue de l'étape c). Cette étape de séchage finale d) est mise en œuvre par la mise en contact de la charge avec un flux de gaz. Ledit flux de gaz entre à ladite étape à une température comprise entre 50 et 150°C, de préférence entre 70 et 120°C pour produire une poudre séchée.

L'objectif de l'étape optionnelle d) de séchage final est de diminuer le taux d'humidité de la poudre issue de l'étape c) à un taux acceptable pour son injection dans une étape de traitement ultérieur et de préférence dans une étape de gazéification. De préférence, l'étape optionnelle d) de séchage final permet d'abaisser le taux d'humidité de la poudre obtenue à l'issue de l'étape c) au-dessous de 3,0 % massique, de préférence entre 1,0 et 3,0 % massique.

De préférence l'étape d) de séchage finale est réalisée simultanément à l'étape de co-broyage c).

L'énergie thermique nécessaire pour ce séchage est apportée soit par combustion d'un flux entrant dans le procédé (gaz naturel par exemple), soit préférentiellement par intégration énergétique par l'intermédiaire d'un échange de chaleur préchauffant l'air de séchage en utilisant un effluent chaud de l'étape ii) de combustion. Selon l'invention, le choix d'un pourcentage suffisamment élevé de perte de masse anhydre de l'étape b) de torréfaction permet de limiter l'utilisation d'un combustible entrant dans le procédé en étape d); en particulier, il limite l'utilisation de combustible d'origine fossile.

### Etape optionnelle e) de stockage

Le procédé selon l'invention peut avantageusement comprendre une ou plusieurs étapes e) de stockage de l'effluent issu de l'une quelconque des étapes du procédé, de préférence de l'étape a), b), c), ou d). De préférence, l'effluent issu de l'étape c) ou d) est stocké pour produire un effluent stocké encore appelé poudre stockée.

Le stockage permet de conserver un volume tampon de charge. Ce volume est nécessaire pour conserver l'opérabilité de la section en aval en cas d'arrêt de la section amont.

L'étape e) de stockage est composée préférentiellement de silos de volumes utiles suffisants pour assurer l'approvisionnement de la section en aval. Par exemple, le volume de ces silos doit assurer un approvisionnement de 24 à 48 heures de la section avale.

L'étape e) de stockage peut également inclure une section de mise en pression via différentes capacités successives fonctionnant de manière séquentielles afin d'augmenter la pression de stockage de la charge jusqu'à une pression compatible avec son injection dans une étape ultérieure et de préférence dans une étape de gazéification.

### Etape optionnelle f) de transport

L'effluent issu de l'étape c) ou l'effluent issu de l'étape d) ou l'effluent issu de l'étape e) de stockage peut avantageusement subir une étape e) de transport. L'effluent ainsi transporté est appelé effluent transporté ou encore poudre transportée. L'étape f) de transport permet de convoyer l'effluent, de préférence formulé et présentant la composition souhaitée, vers une étape ultérieure et de préférence vers une étape g) de gazéification.

De préférence, l'étape f) de transport est mise en œuvre selon la technologie du transport pneumatique.

Le gaz vecteur utilisé dans l'étape f) de transfert par transport pneumatique est préférentiellement de l'azote, du CO₂ ou tout autre gaz inerte permettant d'éviter la formation d'une zone à atmosphère explosive (ATEX poudres) et compatible avec l'étape ultérieure située en aval et de préférence avec l'étape f) de gazéification.

Le débit du gaz vecteur est calculé selon des méthodes connues de l'homme du métier afin d'obtenir à la fois le débit et la densité de transport voulus. Les paramètres de l'étape b) de torréfaction et de l'étape c) de co-broyage sont sélectionnés de manière à optimiser la qualité de ce transport (UMF optimisé en accord avec les consommations énergétiques de ces sections).

### Etape optionnelle g) de gazéification

La poudre issue de l'étape c), d) ou d'une étape e) de stockage est transportée à l'étape f), de préférence formulée et présentant la composition souhaitée, peut avantageusement être envoyée dans une étape ultérieure g) de gazéification.

Ladite étape g) de gazéification met en œuvre une réaction d'oxydation partielle qui convertit la charge en un gaz de synthèse comprenant majoritairement du monoxyde de carbone et de l'hydrogène. L'étape g) de gazéification s'opère avantageusement en présence d'une quantité maitrisée d'oxygène sous la forme d'un flux dont le débit est contrôlé et contenant au moins 90% volume d'oxygène, de préférence au moins 96% volume d'oxygène.

L'étape g) de gazéification de l'effluent est avantageusement réalisée selon les méthodes connues de l'homme du métier.

De préférence, elle est réalisée dans un gazéifieur de type plasma, lit fixe, ou lit fluidisé ou de façon préférée dans un gazéifieur à flux entrainé à paroi refroidie à haute température, c'est-à-dire à une température comprise entre 800 et 1800°C, de préférence entre 1000 et 1600°C et plus préférentiellement entre 1200 et 1500°C et à une pression absolue avantageusement comprise entre 2 et 12 MPa, de préférence entre 2,5 et 6 MPa, et plus préférentiellement entre 3 et 5 MPa. La haute température permet d'obtenir un taux de conversion du carbone élevé et donc de réduire la quantité de carbone non converti dans les cendres produites et ainsi de réduire la quantité de cendres recyclées vers le gazéifieur.

Dans un mode particulier de l'invention, le procédé comprend les étapes a), b), et c), ou les étapes a), b), c) et d), ou les étapes a), b), c), d), et e), ou les étapes a), b), c), d), e) et f), ou les étapes a), b), c), d), e), f) et g).

Dans un mode particulier de l'invention, le procédé est constitué des étapes a), b), et c), ou les étapes a), b), c) et d), ou les étapes a), b), c), d), et e), ou les étapes a), b), c), d), e) et f), ou les étapes a), b), c), d), e), f) et g).

Les exemples ci-dessous illustrent l'invention sans en limiter la portée.

### EXEMPLES

### Exemple 1 : procédé sans co-broyage (selon l'art antérieur)

Selon cet exemple, le procédé permet de traiter deux charges sur deux chaînes de préparation distinctes :
- Une charge A de type biomasse lignocellulosique sous forme de copeaux de bois de chêne de taille caractéristique 20 à 30mm. L'humidité de cette charge est de 30% massique.
- Une seconde charge de biomasse B de type biomasse lignocellulosique sous forme de copeaux de bois de hêtre de taille caractéristique 20 à 30mm. L'humidité de cette charge est de 30% massique.

Les charges A et B sont ici différentes.

Ce procédé ne comporte pas d'étape de co-broyage, ni d'intégration énergétique entre les étapes de traitement des charges A et B.

Le procédé de traitement de la charge A comporte une étape d'intégration énergétique de l'étape b) de torréfaction vers l'étape a) de séchage de la biomasse.

L'objectif de ce procédé est de préparer 1 tonne de charge par heure pour le procédé en aval, ici une gazéification.

### Description de la chaîne de préparation de la charge A :

La charge A est mélangée avec la seconde charge de biomasse B. Le mélange est envoyé dans une étape de séchage permettant de diminuer à 3% massique l'humidité de la charge. La température du solide en sortie de l'étape de séchage est de 70°C. Les copeaux séchés sont convoyés dans une étape de torréfaction opérant à une température moyenne de 300°C. La perte de masse anhydre au cours de l'étape de torréfaction est de 27%. L'humidité résiduelle des copeaux sortie de cette étape et considérée nulle.

Les copeaux séchés et torréfiés sont envoyés dans une étape de broyage dont la technologie est connue de l'homme du métier, par exemple de type broyeur pendulaire à rouleaux (Roller mill). Cette étape permet de réduire la taille des particules majoritairement (90% des particules) en deçà de 90 microns. La technique utilisée pour la caractérisation de la taille des particules utilise des tamis selon la norme NF EN 933.

Selon cet exemple, il n'y a pas d'étape dite de séchage final, la charge A sous forme de poudre séchée et torréfiée est envoyée via un transport pneumatique en phase diluée dans une étape de stockage puis dans une étape de transport pneumatique permettant de l'injecter dans le procédé aval de gazéification. Le transport pneumatique est ici effectué en phase dense. L'étape de transport pneumatique en phase dense est réalisée avec de l'azote comme gaz vecteur inerte.

Le tableau ci-dessous donne les consommations d'utilités de ce schéma :

| | Utilités & production | | |
|---|---|---|---|
| | Charge biomasse A DAF | t/h | 1,02 |
| | Charge biomasse B DAF | t/h | 0,25 |
| | Charge produite | t/h | 1,00 |
| Ensemble des étapes | Electricité consommée | MJ/h | 153 |
| Etapes d) et d') | Gaz naturel consommé | MJ/h | 293 |
| Etapes e), f), e') et f') | Azote consommé | Nm³/h | 313 |

L'électricité consommée inclut l'électricité nécessaire au broyage dans le broyeur pendulaire.

Le gaz naturel consommé correspond aux séchages primaire et final.

L'azote correspond aux besoins de transport pneumatique et d'aération dans les silos.

### Exemple 2 : procédé avec co-broyage sans intégration énergétique vers l'étape (selon l'invention)

Selon cet exemple, le procédé permet de traiter deux charges :
- Une première charge de biomasse A de type biomasse lignocellulosique sous forme de copeaux de bois de chêne de de taille caractéristique 20 à 30mm. L'humidité de cette charge est de 30% massique.
- Une seconde charge de biomasse B de type biomasse lignocellulosique sous forme de copeaux de bois de hêtre de taille caractéristique 20 à 30mm. L'humidité de cette charge est de 30% massique.

Ce procédé comporte une étape de co-broyage entre la chaîne de préparation de la charge A et celle de la charge B et ne comporte pas d'intégration énergétique vers l'étape d) de séchage. Les étapes de co-broyage et le séchage final sont réalisées simultanément.

La chaleur issue de la combustion des gaz de torréfaction est utilisée dans l'étape b) de torréfaction ainsi que pour l'étape a) de séchage.

L'objectif de ce procédé est de préparer 1 tonne de charge par heure pour le procédé en aval, ici une gazéification.

### Description de la chaîne de préparation de la charge mélangée:

La charge A est envoyée dans une étape de séchage permettant de diminuer à 3% massique l'humidité de la charge. La température du solide en sortie de l'étape de séchage est de 70°C. Les copeaux séchés sont convoyés dans une étape de torréfaction opérant à une température moyenne de 300°C. La perte de masse anhydre au cours de l'étape de torréfaction est de 27%. L'humidité résiduelle des copeaux est négligeable en sortie de cette étape et considérée nulle.

Les copeaux séchés et torréfiés sont envoyés dans une étape de co-broyage dont la technologie est connue de l'homme du métier, par exemple de type broyeur pendulaire à rouleaux. La seconde charge de biomasse B est convoyée directement dans ce même broyeur (sans prétraitement préalable). Cette étape permet de réduire la taille des particules majoritairement (90% des particules) en deçà de 90microns. La technique utilisée pour la caractérisation de la taille des particules utilise des tamis selon la norme NF EN 933.

Selon cet exemple, le mélange de charges subit une étape de séchage d) concomitante à l'étape de broyage. Un effet inattendu de ce broyage-séchage en mélange est de diminuer l'énergie nécessaire au séchage de la charge B. En effet, le broyage de la charge A est exothermique et produit une chaleur utilisée pour le séchage de la charge B. Ladite chaleur générée par le broyage de A permet de diminuer de façon notable l'énergie consommée pour le séchage. Cet effet est sensible sur la consommation de gaz naturel du brûleur permettant de monter la température de l'atmosphère du broyeur. Le mélange de charges A et B sous forme de poudre séchée issu du broyage est envoyé via un transport pneumatique en phase diluée dans une étape de stockage puis dans une étape de transport pneumatique permettant de l'injecter dans le procédé aval de gazéification. Le transport pneumatique est ici effectué en phase dense. L'étape de transport pneumatique en phase dense est ici réalisée avec un gaz vecteur inerte, le gaz étant de l'azote dans cet exemple.

Le tableau ci-dessous donne les consommations d'utilités de ce schéma :

| | Utilités & production | | |
|---|---|---|---|
| | Charge biomasse A DAF | t/h | 1,02 |
| | Charge biomasse B DAF | t/h | 0,25 |
| | Charge produite | t/h | 1,00 |
| Ensemble des étapes | Electricité consommée | MJ/h | 127 |
| Etapes d) | Gaz naturel consommé (PCI) | MJ/h | 286 |
| Etapes e) et f) | Azote consommée | Nm3/h | 339 |

L'électricité consommée inclut l'électricité nécessaire au broyage dans le broyeur pendulaire.

Le gaz naturel consommé correspond à l'étape d) de séchage final.

L'azote correspond aux besoins de transport pneumatique et d'aération dans les silos.

### Exemple 3 : procédé avec co-broyage avec intégration énergétique vers l'étape d) de séchage finale (selon l'invention)

Selon cet exemple, le procédé comporte une étape de co-broyage entre la chaîne de préparation de la charge A et celle de la charge B et permet donc de traiter les deux charges sur une seule et unique chaîne de préparation. De plus ce procédé comporte une intégration énergétique vers l'étape d) de séchage final.

Les étapes de co-broyage et de séchage final sont réalisées simultanément.

Les caractéristiques des charges A et B mises en œuvres dans ce procédé sont identiques à celles des charges A et B mises en œuvres dans l'exemple 2.

La chaleur issue de la combustion des gaz de torréfaction est utilisée dans l'étape b) de torréfaction ainsi que pour l'étape a) de séchage.

L'avantage du procédé mis en œuvre dans cette exemple est une intégration énergétique de l'étape de torréfaction vers l'étape de séchage final de la poudre du mélange de charge. Dans ce cas, la perte de masse anhydre est de 28% environ et permet avantageusement de produire la chaleur nécessaire audit séchage final.

L'intégration énergétique ou encore appelée intégration thermique est ici réalisée de manière indirecte, par l'intermédiaire de l'utilisation d'un échangeur de chaleur.

Le tableau ci-dessous donne les consommations d'utilités de ce schéma :

| | Utilités & production | | |
|---|---|---|---|
| | Charge biomasse A DAF | t/h | 1,06 |
| | Charge biomasse B DAF | t/h | 0,25 |
| | Charge entrante | t/h | 1,00 |
| Ensemble des étapes | Electricité consommée | MJ/h | 127 |
| Etape d) | Gaz naturel consommé (PCI) | MJ/h | 0 |
| Etapes e) et f) | Azote consommée | Nm3/h | 339 |

L'électricité consommée inclut l'électricité nécessaire au broyage dans le broyeur pendulaire.

Le gaz naturel consommé correspond à l'étape d) de séchage final.

L'azote correspond aux besoins de transport pneumatique et d'aération dans les silos.

Ces exemples montrent clairement que le co-broyage (exemple 2) des charges A et B permet de diminuer significativement la consommation de gaz naturel, de 293 (exemple 1) à 296 Mj/h. En outre, l'intégration énergétique vers l'étape d) de séchage finale (exemple 3) permet d'être autotherme c'est-à-dire sans besoin d'apport énergétique externe. Le débit de charge entrant dans le procédé est alors 1.06 t/h pour une production de 1.0 t/h. La perte de masse anhydre correspondant permet ainsi de générer la chaleur nécessaire à l'intégration thermique de la torréfaction avec le séchage final de la charge.

## Revendications

1. Procédé de traitement d'une première charge solide de biomasse, ledit procédé comprenant les étapes suivantes :
a) Une étape de séchage de ladite charge à une température comprise entre 20 et 180°C, pendant une durée comprise entre 5 et 180 minutes,
b) Une étape de torréfaction de la charge séchée issue de l'étape a) pour produire au moins un effluent solide biomasse torréfiée, et
c) Une étape de co-broyage de l'effluent solide biomasse torréfiée issu de l'étape b) en présence d'une seconde charge solide de biomasse pour obtenir une poudre
dans lequel la seconde charge solide de biomasse entrante à l'étape c) de co-broyage à un taux d'humidité compris entre 3,1 et 30 % massique.

2. Procédé selon la revendication 1 comprenant une étape d) de séchage finale de la poudre obtenue à l'issue de l'étape c) à une température comprise entre 100 et 300°C.

3. Procédé selon l'une quelconque des revendications précédentes dans lequel l'étape d) de séchage est réalisée simultanément à l'étape c) de co-broyage.

4. Procédé selon l'une quelconque des revendications précédentes dans lequel la première et la seconde charge solide de biomasse sont choisies parmi la biomasse lignocellulosique solide.

5. Procédé selon l'une quelconque des revendications précédentes dans lequel la première et la seconde charge solide de biomasse sont identiques.

6. Procédé selon l'une quelconque des revendications précédentes comprenant une étape i) de prétraitement de la première charge solide de biomasse, de préférence de broyage primaire.

7. Procédé selon l'une quelconque des revendications précédentes dans lequel l'étape b) de torréfaction est réalisée à une température comprise entre 200 et 350°C, de préférence entre 220 et 340°C, de préférence entre 250 et 320°C et plus préférentiellement entre 270 et 300°C pendant une durée comprise entre 5 et 180 minutes, et préférentiellement entre 15 et 60 minutes, à une pression opératoire absolue comprise préférentiellement entre 0,01 et 1,5 MPa, de manière préférée entre 0,01 et 1,0 MPa et de manière plus préférée entre 0,05 et 0,15 MPa.

8. Procédé selon l'une quelconque des revendications précédentes comprenant une étape ii) de combustion des gaz de torréfaction issu de l'étape b).

9. Procédé selon l'une quelconque des revendications précédentes dans lequel l'énergie issue de l'étape ii) de combustion des gaz de torréfaction est utilisée pour apporter l'énergie thermique nécessaire dans une étape du procédé, de préférence aux étapes a), b) et/ou d).

10. Procédé selon l'une quelconque des revendications précédentes dans lequel la seconde charge solide de biomasse est préalablement soumise à une étape iii) de séchage préliminaire et/ou de broyage primaire.

11. Procédé selon l'une quelconque des revendications précédentes dans lequel l'effluent solide biomasse torréfiée issu de l'étape b) est introduite dans l'étape c) de co-broyage dans un pourcentage massique entre l'effluent solide biomasse torréfiée dans la charge totale solide compris entre 1 et 99 % massique, de préférence entre 50 et 98 % massique, et préférentiellement entre 40 et 95% massique, ladite charge totale solide étant la somme de l'effluent solide de biomasse torréfiée et de seconde charge solide de biomasse.

12. Procédé selon l'une quelconque des revendications précédentes dans lequel la seconde charge solide de biomasse entrante à l'étape c) de co-broyage à un taux d'humidité compris entre 4 et 25 % massique.

13. Procédé selon l'une quelconque des revendications précédentes comprenant une ou plusieurs étapes de stockage e) de l'effluent issu de l'une ou quelconque des étapes du procédé, de préférence à l'une ou plusieurs des étapes a), b), c), ou d).

14. Procédé selon l'une quelconque des revendications précédentes comprenant une étape f) de transport, de préférence de transport pneumatique.

15. Procédé selon l'une quelconque des revendications précédentes comprenant une étape g) de gazéification à une température comprise entre 800 et 1800°C, de préférence entre 1000 et 1600°C et plus préférentiellement entre 1200 et 1500°C et à une pression avantageusement comprise entre 2 et 12 MPa, de préférence entre 2,5 et 6 MPa, et plus préférentiellement entre 3 et 5 MPa.

## Patentansprüche

1. Verfahren zur Behandlung einer ersten feststofflichen Charge an Biomasse, wobei das Verfahren die folgenden Schritte umfasst:
a) einen Schritt des Trocknens der Charge bei einer Temperatur im Bereich von 20 bis 180 °C, während einer Zeitdauer im Bereich von 5 bis 180 Minuten,
b) einen Schritt des Röstens der getrockneten Charge, die aus dem Schritt a) stammt, um mindestens einen feststofflichen Stoffstrom gerösteter Biomasse herzustellen, und
c) einen Schritt des gemeinsamen Vermahlens des feststofflichen Stoffstroms gerösteter Biomasse, der aus dem Schritt b) stammt, in Gegenwart einer zweiten feststofflichen Charge an Biomasse, um ein Pulver zu erhalten,
wobei die zweite feststoffliche Charge an Biomasse, wenn sie in den Schritt c) des gemeinsamen Vermahlens gelangt, einen Feuchtigkeitsgehalt im Bereich von 3,1 bis 30 Massen-% hat.

2. Verfahren nach Anspruch 1, das einen Schritt d) des abschließenden Trocknens des Pulvers, welches nach Abschluss des Schrittes c) erhalten wurden, bei einer Temperatur im Bereich von 100 bis 300 °C umfasst.

3. Verfahren nach einem beliebigen der vorhergehenden Ansprüche, wobei der Schritt d) des Trocknens gleichzeitig mit dem Schritt c) des gemeinsamen Vermahlens durchgeführt wird.

4. Verfahren nach einem beliebigen der vorhergehenden Ansprüche, wobei die erste und die zweite fefeststoffliche Charge an Biomasse aus feststofflicher lignocelluloseartiger Biomasse ausgewählt sind.

5. Verfahren nach einem beliebigen der vorhergehenden Ansprüche, wobei die erste und die zweite feststoffliche Charge an Biomasse vollkommen gleichartig sind.

6. Verfahren nach einem beliebigen der vorhergehenden Ansprüche, das einen Schritt i) des Vorbehandelns der ersten feststofflichen Charge an Biomasse, vorzugsweise des primären Vermahlens, umfasst.

7. Verfahren nach einem beliebigen der vorhergehenden Ansprüche, wobei der Schritt b) des Röstens bei einer Temperatur im Bereich von 200 bis 350 °C, vorzugsweise von 220 bis 340 °C, vorzugsweise von 250 bis 320 °C, und stärker bevorzugt von 270 bis 300 °C während einer Zeitdauer im Bereich von 5 bis 180 Minuten, und vorzugsweise von 15 bis 60 Minuten, bei einem absoluten Betriebsdruck durchgeführt wird, welcher vorzugsweise im Bereich von 0,01 bis 1,5 MPa, auf bevorzugte Weise von 0,01 bis 1,0 MPa und auf stärker bevorzugte Weise von 0,05 bis 0,15 MPa liegt.

8. Verfahren nach einem beliebigen der vorhergehenden Ansprüche, das einen Schritt ii) des Verbrennes der Röstgase aus dem Schritt b) umfasst.

9. Verfahren nach einem beliebigen der vorhergehenden Ansprüche, wobei die Energie, welche aus dem Schritt ii) des Verbrennens der Röstgase stammt, dazu verwendet wird, die thermische Energie zuzuführen, welche in einem Schritt des Verfahrens, vorzugsweise in den Schritten a), b) und/oder d) benötigt wird.

10. Verfahren nach einem beliebigen der vorhergehenden Ansprüche, wobei die zweite feststoffliche Charge an Biomasse im Vorfeld einem Schritt iii) des vorgeschalteten Trocknens und/oder des primären Vermahlens unterzogen wird.

11. Verfahren nach einem beliebigen der vorhergehenden Ansprüche, wobei der feststoffliche Stoffstrom gerösteter Biomasse, welcher aus dem Schritt b) stammt, dem Schritt c) des gemeinsamen Vermahlens derart zugeführt wird, dass der prozentuale Massenanteil des feststofflichen Stoffstroms gerösteter Biomasse in der feststofflichen Gesamtcharge im Bereich von 1 bis 99 Massen-%, vorzugsweise von 50 bis 98 Massen-%, und bevorzugt von 40 bis 95 Massen-% liegt, wobei es sich bei der feststofflichen Gesamtcharge um die Summe aus dem feststofflichen Stoffstrom aus gerösteter Biomasse und aus zweiter feststofflicher Charge an Biomasse handelt.

12. Verfahren nach einem beliebigen der vorhergehenden Ansprüche, wobei die zweite feststoffliche Charge an Biomasse, wenn sie in den Schritt c) des gemeinsamen Vermahlens gelangt, einen Feuchtigkeitsgehalt im Bereich von 4 bis 25 Massen- % hat.

13. Verfahren nach einem beliebigen der vorhergehenden Ansprüche, das einen oder mehrere Schritte e) des Speicherns des Stoffstroms umfasst, welcher aus einem oder einem beliebigen der Schritte des Verfahrens stammt, vorzugsweise in einem oder mehreren der Schritte a), b), c) oder d).

14. Verfahren nach einem beliebigen der vorhergehenden Ansprüche, wobei es einen Schritt f) des Förderns, vorzugsweise des pneumatischen Förderns, umfasst.

15. Verfahren nach einem beliebigen der vorhergehenden Ansprüche, wobei es einen Schritt g) des Vergasens bei einer Temperatur im Bereich von 800 bis 1800 °C, vorzugsweise von 1000 bis 1600 °C und stärker bevorzugt von 1200 bis 1500 °C und bei einem Druck umfasst, welcher vorteilhafterweise im Bereich von 2 bis 12 MPa, vorzugsweis von 2,5 bis 6 MPa, und stärker bevorzugt von 3 bis 5 MPa liegt.

## Claims

1. Process for treating a first solid biomass feedstock, said process comprising the following steps:
a) a step of drying of said feedstock at a temperature of between 20 and 180°C for a period of between 5 and 180 minutes,
b) a step of torrefaction of the dried feedstock resulting from step a) to produce at least one torrefied solid biomass effluent, and
c) a step of co-grinding of the torrefied solid biomass effluent resulting from step b) in the presence of a second solid biomass feedstock to obtain a powder, wherein the second solid biomass feedstock entering co-grinding step c) has a moisture content of between 3.1% and 30% by mass.

2. Process according to Claim 1, comprising a step d) of final drying of the powder obtained at the end of step c) at a temperature of between 100 and 300°C.

3. Process according to either one of the preceding claims, wherein drying step d) is carried out simultaneously with co-grinding step c).

4. Process according to any one of the preceding claims, wherein the first and the second solid biomass feedstock are chosen from solid lignocellulosic biomass.

5. Process according to any one of the preceding claims, wherein the first and the second solid biomass feedstock are identical.

6. Process according to any one of the preceding claims, comprising a step i) of pretreatment of the first solid biomass feedstock, preferably of primary grinding.

7. Process according to any one of the preceding claims, wherein torrefaction step b) is carried out at a temperature of between 200 and 350°C, preferably between 220 and 340°C, preferably between 250 and 320°C and more preferentially between 270 and 300°C, for a period of between 5 and 180 minutes, and preferentially between 15 and 60 minutes, at an absolute operating pressure preferentially of between 0.01 and 1.5 MPa, preferably between 0.01 and 1.0 MPa and more preferably between 0.05 and 0.15 MPa.

8. Process according to any one of the preceding claims, comprising a step ii) of combustion of the torrefaction gases resulting from step b).

9. Process according to any one of the preceding claims, wherein the energy resulting from step ii) of combustion of the torrefaction gases is used to provide the thermal energy required in a step of the process, preferably to steps a), b) and/or d).

10. Process according to any one of the preceding claims, wherein the second solid biomass feedstock is subjected beforehand to a step iii) of preliminary drying and/or of primary grinding.

11. Process according to any one of the preceding claims, wherein the torrefied solid biomass effluent resulting from step b) is introduced into the co-grinding step c) in a mass percentage of the torrefied solid biomass effluent in the total solid feedstock of between 1% and 99% by mass, preferably between 50% and 98% by mass, and preferentially between 40% and 95% by mass, said total solid feedstock being the sum of the torrefied solid biomass effluent and the second solid biomass feedstock.

12. Process according to any one of the preceding claims, wherein the second solid biomass feedstock entering the co-grinding step c) has a moisture content of between 4% and 25% by mass.

13. Process according to any one of the preceding claims, comprising one or more steps of storage e) of the effluent resulting from one or any of the steps of the process, preferably from one or more of the steps a), b), C) or d) .

14. Process according to any one of the preceding claims, comprising a step f) of transport, preferably of pneumatic transport.

15. Process according to any one of the preceding claims, comprising a step g) of gasification at a temperature of between 800 and 1800°C, preferably between 1000 and 1600°C and more preferentially between 1200 and 1500°C, and at a pressure advantageously of between 2 and 12 MPa, preferably between 2.5 and 6 MPa, and more preferentially between 3 and 5 MPa.
